# EUROPEAN PATENT SPECIFICATION

(11) **EP 1 353 328 B1**
(45) Date of publication and mention of the grant of the patent: **22.12.2010**
(21) Application number: 03252248.4
(22) Date of filing: 09.04.2003
(51) Int. Cl.: G11B 15/02, G11B 15/18, H04N 5/76, H04N 9/64, G11B 31/00, H04B 1/10, H04N 5/765

(54) **Recording medium player apparatus**
Vorrichtung zur Wiedergabe eines Aufnahmemediums
Appareil de reproduction de support d'enregistrement

(30) Priority: 11.04.2002 KR 2002019691
(43) Date of publication of application: 15.10.2003
(73) Proprietor: SAMSUNG ELECTRONICS CO., LTD., Suwon-si, Gyeonggi-do 442-742 (KR)
(72) Inventor: Cho, Byung-hyuk, Suwon-city, Gyunggi-do (KR)
(74) Representative: Walaski, Jan Filip

(56) References cited:
- EP-A- 0 471 615
- EP-A- 0 507 433
- EP-A- 0 725 491
- US-A- 4 337 480
- US-A- 5 915 206

## Description

The present invention relates to a recording medium player apparatus, comprising first and second playback means for outputting respective first and second signals and control means for selectively outputting said first and second signals.

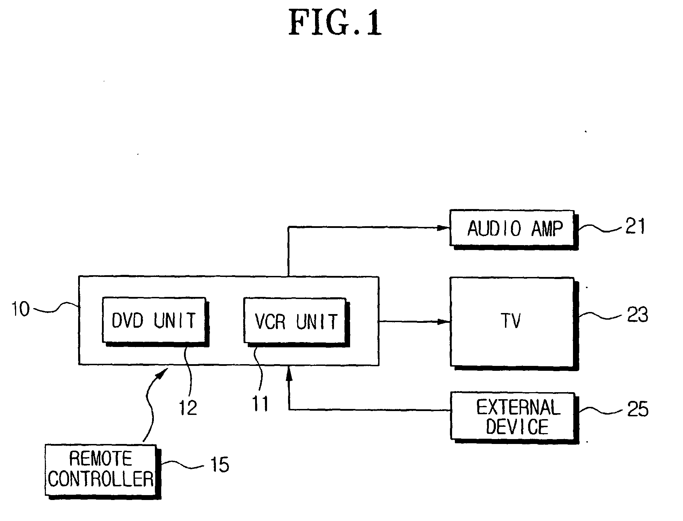

Figure 1 is a schematic block diagram of a conventional combined DVDP/VCR system. Referring to Figure 1, the conventional combined DVDP/VCR system 10 has a video cassette recorder (VCR) unit 11 for performing the functions of a VCR such as reproducing video and audio from a magnetic tape and recording an externally received signal onto a magnetic tape, and a digital versatile disk player (DVDP) unit 12 for performing the functions of a DVDP such as reproducing video and audio from a DVD. In addition to the separate functions of the VCR unit 11 and the DVDP unit 12, the combined DVDP/VCR system 10 also has combined functions such as recording the video and audio reproduced from the DVDP unit 12 onto a magnetic tape by the VCR unit 11.

The combined DVDP/VCR system 10 is connected to a television 23 for outputting the video and audio reproduced from the DVDP unit 12 or from the VCR unit 11, and is also connected to an audio amplifier 21 for outputting the audio signal reproduced from the DVDP unit 12. In addition, the combined DVDP/VCR system 10 can be connected to an external device 25, such as a camcorder, and therefore the combined DVDP/VCR system 10 can record and reproduce the video and audio input from the external device 25.

The VCR unit 11 and the DVDP unit 12 of the combined DVDP/VCR system 10 are constructed as one system. Hence, a user can switch between the modes of the VCR unit 11 and the DVDP unit 12, and manipulate the respective functions of the VCR unit 11 and the DVDP unit 12 by manipulating a separate input device, such as a remote controller 15, or by manipulating an operation panel (not shown) provided with the combined DVDP/VCR system 10.

In the conventional combined DVDP/VCR system 10 constructed as described above, video and audio signals are output through a display unit (e.g. a television) by a reproduction operation performed by the VCR unit 11 or the DVDP unit 12. When one of the units 11, 12 is performing a reproduction operation and the user wants the other unit 11, 12 to perform a reproduction operation instead, he or she has to switch the play mode of the reproducing unit 11, 12 to a stop mode, and then switch the mode of the other unit 11, 12 to a play mode, which is quite complicated.

JP-A-07-312071 discloses a reproducing device which includes a combination apparatus having improved operability, in an attempt to solve the above problems.

Figure 2 is a block diagram of a combined DVDP/VCR system as described in JP-A-07-312071. Referring to Figure 2, the combined DVDP/VCR system includes a VCR unit 11A, a DVDP unit 12A, an input unit 20 for selecting the VCR unit 11A or the DVDP unit 12A to operate in a play mode, and an output determining unit 30 for controlling the selected unit 11A, 12A to operate in the play mode. The reproducing device further includes an output selecting unit 40 for selecting the output signal from the VCR unit 11A or the DVDP unit 12A operating in a play mode under the control of the output determining unit 30, and a display unit 50 for displaying an output signal reproduced by the unit 11A, 12A that is selected by the output selecting unit 40.

For example, when the user inputs a VCR reproduction command through the input unit 20 during the reproduction operation of the DVDP unit 12A, the output determining unit 30 controls the VCR unit 11A to perform a reproduction operation, while controlling the DVDP unit 12A to stop the reproduction operation. The output selecting unit 40 selects the output signal reproduced from the VCR unit 11A and outputs the selected output signal to the display unit 50.

In other words, the device disclosed in JP-A-07-312071 provides improved operability for the case where the user inputs, through the input unit 20, a command for a reproduction operation of a first unit during a reproduction operation of a second unit, by preferentially switching the mode of the first unit into a play mode and outputting the reproduced signal through the display unit 50.

Although the combination apparatus disclosed in JP-A-07-312071 provides improved operability when a unit is made to switch to a play mode through the input unit 20. The improvement in operability does not occur when the unit is made to switch to the play mode upon insertion of a recording medium, namely, a videotape or DVD, into a deck (not shown).

For example, in the case where the DVDP unit 12A is switched to a play mode due to insertion of a DVD in the deck when a reproduction operation is being performed by the VCR unit 11A, the output determining unit 30 cannot determine that the DVDP unit 12A has entered the play mode, and accordingly, the VCR unit 11A keeps operating in a play mode. Therefore, the user has to separately input the stop command for the DVDP unit 12A through the input unit 20, or stop the operation of the DVDP unit 12A by taking the DVD out of the deck.

Furthermore, when the user needs to switch the DVDP unit 12A to a play mode to search the recorded contents on the DVD when a reproduction operation is being performed by the VCR unit 11A, the user has to switch the VCR unit 11A to a stop mode, and then switch the DVDP unit 12A to a play mode. The user also has to switch the VCR unit 11A back to a play mode after the completion of search, which results in inconvenience for the user.

EP-A-0 471 615 discloses the features of the pre-characterising part of claim 1.

A recording medium player apparatus, according to the present invention, is characterised by control means for selectively outputting said first and second signals, selection information storage means for storing a signal source selection value, the selection value being set in dependence on the playback means whose playback operation was most recently initiated and the control means being configured to select the first or second signal for output in dependence on said signal source selection value.

Preferably, the control means is configured to put the playback means, which does not correspond to the selection value stored in the selection information storage means, into a pause mode, in response to a change in the selection value. More preferably, the control means is configured to put said playback means into a stop mode if the selection value does not change again within a predetermined time.

Preferably, the apparatus comprises user input means, wherein the control means is configured to invite the user to input a request, via the user input means, to put the playback means, which does not correspond to the selection value stored in the selection information storage means, into a stop mode, in response to a change in the selection value.

Preferably, the first playback means comprises an auto playback function such that the playback means enters a playback mode upon insertion of a recording medium thereinto.

Preferably, said first and second playback means comprise a DVD deck and a VCR deck respectively.

Embodiments of the present invention will now be described, by way of example, with reference to Figures 3 to 6 of the accompanying drawings, in which:
Figure 1 is a schematic block diagram of a conventional combined DVDP/VCR system;

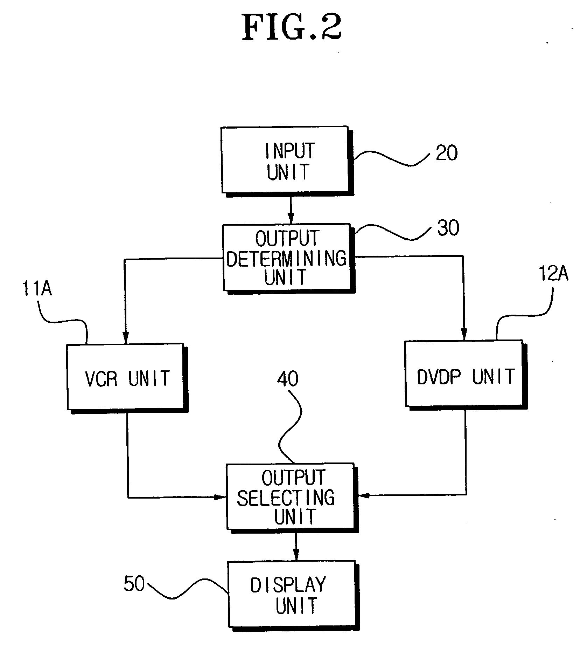

Figure 2 is a block diagram of a combined DVDP/VCR system as described in JP-A-07-312071;
Figure 3 is a block diagram of an example of a combined DVDP/VCR system according to the present invention;
Figure 4 is a flowchart showing an example of a method for controlling the operation of the combined DVDP/VCR system shown in Figure 3;
Figure 5 is a flowchart showing another example of a method for controlling the operation of the combined DVDP/VCR system shown in Figure 3 according to the present invention; and
Figure 6 is a view showing an example of a selection menu displayed on a screen according to the operation controlling method shown in Figure 5.

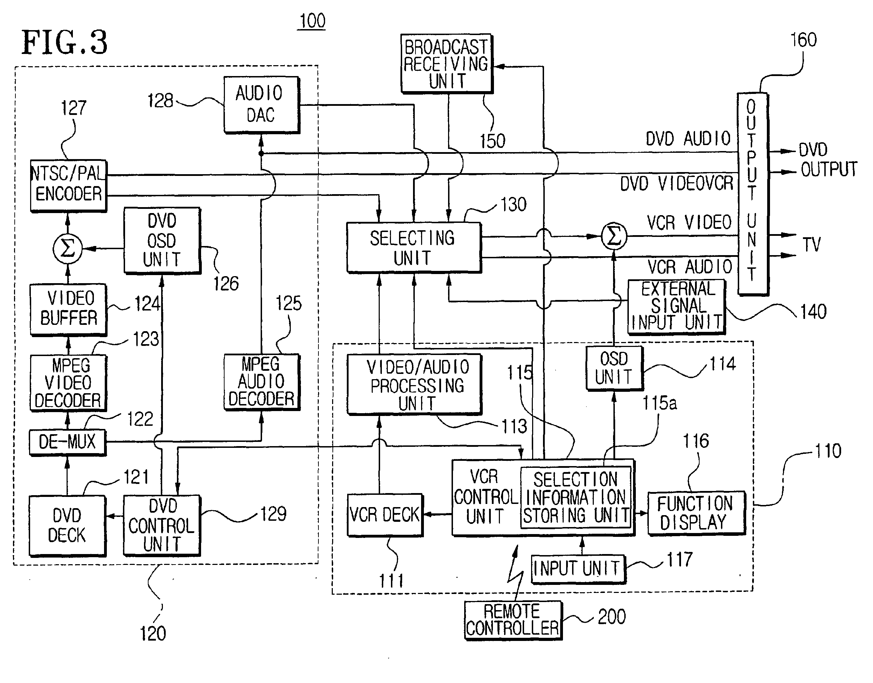

Referring to Figure 3, the combined DVDP/VCR system 100 includes a DVDP unit 120 and a VCR unit 110. Specifically, the combined DVDP/VCR system 100 includes a VCR unit 110 for performing the functions of a VCR, a DVDP unit 120 for performing the functions of a DVDP, an external signal input unit 140 for inputting signals from external devices, such as a camcorder, and a broadcast television receiver unit 150 for receiving a broadcast television signal. The system 100 further includes a selecting unit 130 for selecting among the signals input from the broadcast television receiver unit 150, the VCR unit 110, the DVDP unit 120 and the external signal input unit 140, and an output unit 160 for providing peripherals, such as a television or amplifier, with the signals output from the VCR unit 110 and the DVDP unit 120.

The VCR unit 110 includes a VCR deck 111, a video/audio processing unit 113, an on-screen display unit (OSD) 114, a VCR control unit 115, a function display 116, an input unit 117, and a remote controller 200 for inputting control commands from a remote area.

The VCR deck 111 operates to record data onto a magnetic tape, or to read recorded data from a magnetic tape. When a magnetic tape is inserted in the VCR deck 111, the VCR control unit 115 switches the VCR unit 110 into a play mode, thereby reproducing signals from the magnetic tape inserted in the VCR deck 111.

The video/audio processing unit 113 processes the video/audio signals reproduced in the VCR deck 111 and outputs the processed signal. The OSD unit 114 generates signals, such as subtitle signals and a selection menu, on an OSD screen. The VCR control unit 115 controls the overall operation of the VCR unit 110, and has a selection information storing unit 115a.

The VCR control unit 115 receives from the DVD control unit 129, information about the operational status and environment setting of the DVDP unit 120. The transmission/reception of the information is made under a predetermined communication protocol with the power of the combined DVDP/VCR system on.

The selection information storing unit 115a stores selection information (also known as a signal source selection value) about whether the reproduced signal selected by the selecting unit 130, under the control signal of the VCR control unit 115, is from the VCR unit 110 or from the DVDP unit 120. Operational commands are input by the user through the input unit 117 and the remote controller 200, and the operational mode and environment setting mode for the VCR unit 110 and the DVDP unit 120 are displayed through the function display 116 for the user's notice.

The DVDP unit 120 includes a DVD deck 121, a DE-MUX 122, a video decoder 123, a video buffer 124, an audio decoder 125, a DVD OSD unit 126, an encoder 127, an audio D/A converter 128 and a DVD control unit 129. Usually, all these components are constructed on a single chip, except for the DVD control unit 129 and the DVD deck 121.

The DVD deck 121 reads the data recorded on a DVD. When a DVD is loaded in the DVD deck 121, the DVD control unit 115 switches the DVD unit 120 to a play mode, thereby reproducing the data from the DVD in the DVD deck 121.

The DE-MUX 122 outputs the data read from the DVD deck 121 as separate video and audio signals. The video decoder 123 and the audio decoder 125 decode the compressed video/audio signals to restore the signals into original digital video/audio signals, and the video buffer 124 stores a predetermined amount of video data, which will generally be sufficient to construct one frame on a screen. The encoder 127 converts the digital video signal into an analogue television image signal, and outputs a component video signal comprising a complex image signal, an S-video signal or a YCbCr signal.

The audio D/A converter 128 converts the digital audio signal output from the audio decoder 125 into an analogue audio signal and outputs the converted analogue audio signal. The DVD OSD unit 126 performs the OSD functions, and stores text data and figures for overlapping with the DVD screen. The DVD control unit 129 controls the overall operation of the DVDP unit 120, and transmits to the VCR control unit 115, information about the operational status and environment setting status of the DVDP unit 120.

The output unit 160 receives the signals output from the DVD encoder 127, the selecting unit 130 and the OSD unit 114, and outputs the input signals as a DVD video, DVD audio, VCR video and a VCR audio signal. The output unit 160 is connected to peripherals, such as a television and an audio system, which output the video and audio respectively.

The external signal input unit 140 is connected to the selecting unit 130, and functions to transmit an externally input signal to the selecting unit 130. The signal output terminals of external devices, such as a camcorder, are connected to the external signal input unit 140. The broadcast television receiver unit 150 is also connected to the selecting unit 130, and receives a broadcast television signal from a broadcasting station and transmits the received broadcast television signal to the selecting unit 130. Accordingly, the signals of external devices and broadcast television signals can be transmitted to the combined DVDP/VCR system 100 through the external signal input unit 140 and the broadcast television receiver unit 150, respectively, and the signals of external devices and broadcast television signals can also be recorded onto a magnetic tape or reproduced through the television or a monitor by using the VCR unit 110.

A method for controlling the operation of the combined DVDP/VCR system 100 according to the present invention will be described below in greater detail.

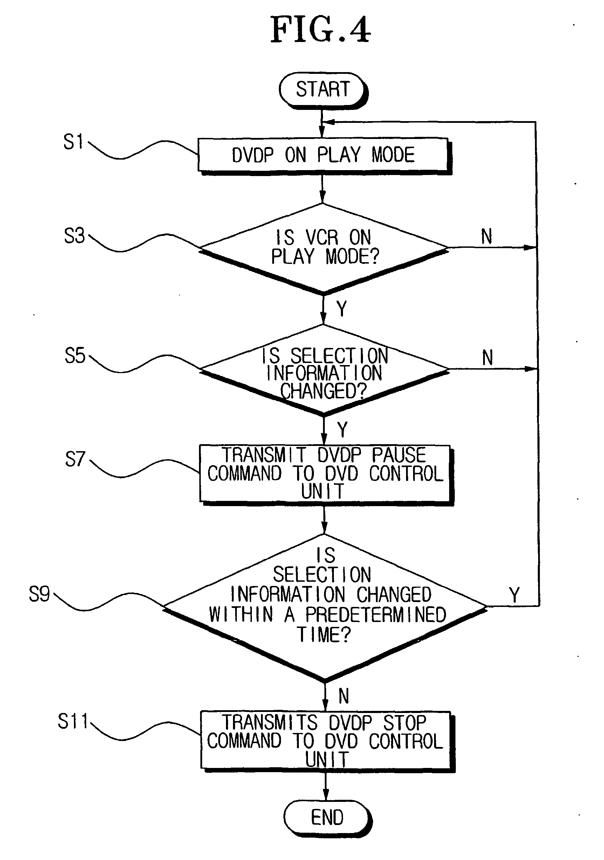

Referring to Figure 4, when the user inputs a reproduction command for the DVDP unit 120 through the input unit 117 or the remote controller 200, or when a DVD is loaded/inserted in the DVD deck 121, the DVDP unit 120 is switched to a play mode in step S1. When the DVD control unit 129 transmits information to the VCR control unit 115 indicating that the DVDP unit 120 is in the play mode, the VCR control unit 115 controls the selecting unit 130 to select the reproduced signals, that is, the video/audio signals, from the DVDP unit 120 and to input the selected signals to the output unit 160. At the same time, the VCR control unit 115 stores selection information, indicating the selection of the DVDP unit 120 by the selecting unit 130, in the selection information storing unit 115a.

When a videotape is inserted into the VCR deck 111 during the reproduction operation (step S1) of the DVDP unit 120 of the combined DVDP/VCR system 100, the VCR control unit 115 recognizes the insertion of the videotape into the VCR deck 111, and switches the VCR unit 110 to a play mode in step S3. The VCR unit 110 can also be switched to the play mode by the user's input of a VCR reproduction command through the input unit 117 or the remote controller 200.

Accordingly, the VCR control unit 115 provides an appropriate control signal, which controls the selecting unit 130 to select the reproduced signal of the VCR unit 110 instead of the reproduced signal of the DVDP unit 120. At the same time, the selection information storing unit 115a of the control unit 115 stores selection information indicating the selection of the VCR unit 110 by the selecting unit 130. The VCR control unit 115 checks the selection information storing unit 115a and determines whether the stored selection information has changed or not in step S5.

When the VCR control unit 115 determines that the stored selection information has changed from the DVDP unit 120 to the VCR unit 110, the VCR control unit 115 transmits a pause command to the DVD control unit 129, to switch the operation of the DVDP unit 120 to a pause mode in step S9. Although the mode is switched to a pause mode in this embodiment as an example, the mode can also be switched to a stop mode.

When it is determined that there is no change in the selection information stored in the selection information storing unit 115a during a predetermined time, for example, when there is no mode switching caused by a stop command given to the VCR unit 110 (or ejection of videotape) and a reproducing command given to the DVDP unit 120 (or insertion of DVD into the DVD deck), the VCR control unit 115 transmits the stop command to the DVD control unit 129 (S11) so as to completely stop the DVDP unit 120 which was in a pause mode.

In this example, the DVDP unit 120 is in the pause mode before it is switched to the stop mode, in case there is a need to switch the DVDP unit 120 to a play mode for making a brief search of the video/audio signals of the DVDP unit 120 and VCR unit 110 that have not been output, for reasons such as setting the environment of the system, and so on.

Accordingly, the DVD control unit 129 switches the operational mode of the DVDP unit 120 in response to the control command transmitted from the VCR control unit 115.

The above description provides an example of a method of mode switching caused by the insertion of the recording medium in the selected deck 111 or 121, and a method of switching the unselected reproducing apparatus to a pause mode and a stop mode when the selected reproducing device is switched to a play mode in response to the reproduction command input from the user through the input unit 117.

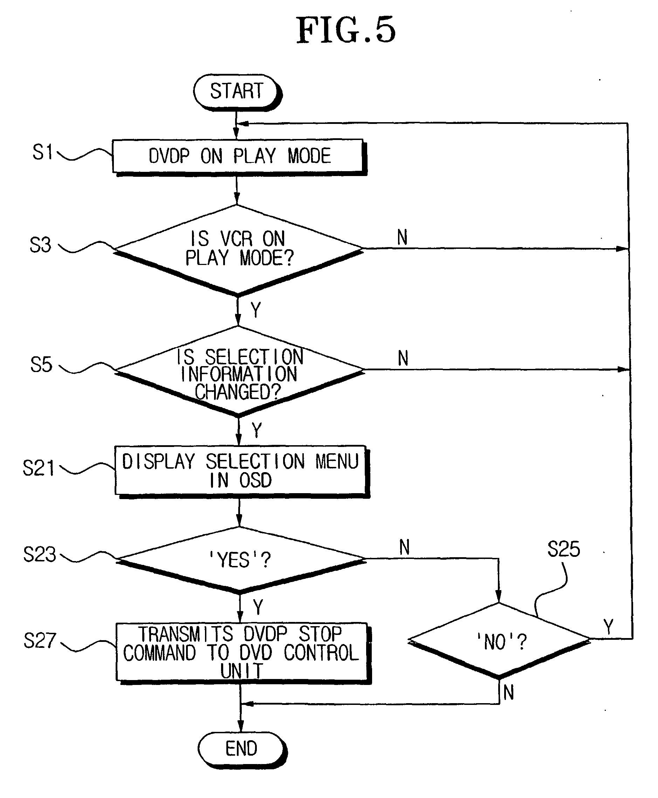

Figure 5 is a flowchart showing another example of a method for controlling the operation of the combined DVDP/VCR system shown in Figure 3 according to the present invention. In this example, the reproducing device, which is not selected during a manual selection, is switched to the pause mode and the stop mode.

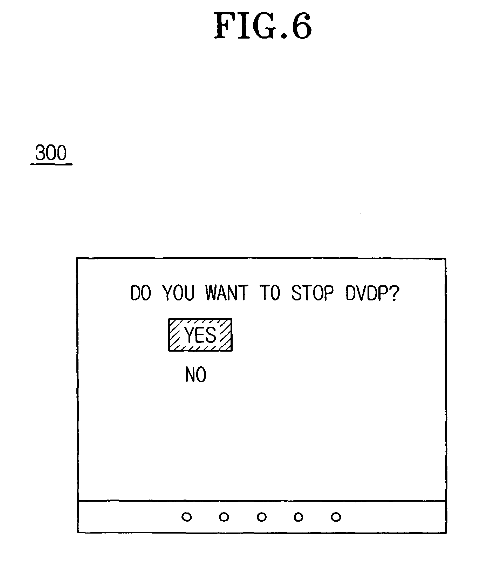

In steps S1 to S5 of Figure 4, and in step S5 in particular, the VCR control unit 115 determines that the selection information stored in the selection information storing unit 115a has changed indicating that the selecting unit 130 has stopped selecting the reproduced signals of the DVDP unit 120 and has begun selecting the reproduced signals of the VCR unit 110. As indicated in step S21 of Figure 5, the VCR control unit 115 displays a certain selection menu on the screen 300 through the OSD unit 114 as shown in Figure 6, to allow for selection of an operational mode of the DVDP unit 120.

Referring to Figure 6, in response to the query, "DO YOU WANT TO STOP DVDP?", the user selects 'YES' (Step S23 of Figure 5) or 'NO' (Step S25 of Figure 5). When 'YES' is selected, the VCR control unit 115 transmits a stop command to the DVD control unit 129 in step S27, to switch the DVDP unit 120 to a stop mode. In order to switch the VCR unit 110 back to the play mode to search the recorded contents in the videotape, the user selects the 'NO' selection in step S25.

As described above, the VCR unit 110 is switched to a play mode during the reproduction operation of the DVDP unit 120, and vice versa. By switching the operational mode of the apparatus not in operation to a pause mode and stop mode, automatically or manually, the combination system having a plurality of reproducing apparatuses has improved operability, while also reducing unnecessary power consumption which is caused due to the unnecessary operation of the reproducing apparatus.

According to the embodiment of the present invention described above, in the combined system of the DVDP unit 120 and the VCR unit 110 for the reproducing operation, the DVDP unit 120 or the VCR unit 110 that is not operating is switched to a pause mode or a stop mode, automatically or manually. As a result, the operability of the system is improved, while the waste of power consumption is prevented.

## Claims

1. A recording medium player apparatus, comprising:
first and second playback means (120, 110) for outputting respective first and second signals; and
control means (115) for selectively outputting said first and second signals; **characterised by**
the second playback means (110) having an auto playback function such that the playback means (120) enters a playback mode upon insertion of a recording medium thereinto; and
the control means having selection information storage means (115a) for storing a first signal source selection value, the selection value representing the playback means whose playback operation was most recently initiated, the selection value representing the second playback means upon insertion of a recording medium thereinto;
the control means (115) being configured to select the second signal for output if the signal source selection value changes from representing the first playback means to the second playback means; and to enter a pause mode of the first playback means.

2. An apparatus according to claim 1, wherein the control means (115) is configured to change said first playback means (120) from a pause mode into a stop mode if the signal source selection value does not change again within a predetermined time.

3. An apparatus according to claim 1, comprising user input means (117, 200, 114), wherein the control means (115) is configured to invite the user to input a request, via the user input means (117, 200, 114), to put the first playback means (120), into a stop mode, in response to a change in the selection value.

4. An apparatus according to any preceding claim, wherein said first and second playback means (120, 110) comprise a DVD deck (121) and a VCR deck (111) respectively.

5. An apparatus according to claim 4, wherein the control means (115) is located in the second playback means (110) housing the VCR deck (111).

6. An apparatus according to claim 4, wherein the control means (115) is further configured to transmit a control signal to a DVD control unit (129) to control the operation of the first playback means (120) so that the operational mode of the first playback means (120) is switched to the pause mode or the stop mode.

7. An apparatus according to claim 1, further comprising:
an on-screen display (OSD) unit (114, 126), adapted to generate a selection menu relating to an operational mode of either one of the playback means (120, 110); and
wherein the control means (115) is further configured to receive a selection command made by a user via the selection menu, and to control the operational mode of either one of the playback means (120, 110) to change in response to the selection command, when the selection value stored in the selection information storage means (115a) is changed from identifying one of the playback means (120, 110) to identifying the other playback means (120, 110).

8. An apparatus according to claim 7, wherein the control means (115) is further configured to transmit a control command to a DVD control unit (129) so that the operational mode of the playback means (120, 110) which includes a DVD deck (121), is switched in response to the selection command made by the user via the selection menu.

9. A method of operating a recording medium player apparatus, comprising the steps of:
outputting respective first and second signals from a first and second playback means (120, 110); and
selectively outputting said first and second signals from a control means (115); **characterised by**
the second playback means (110) entering a playback mode upon insertion of a recording medium thereinto;
storing a signal source selection value in a storage means of the control means, the selection value representing the playback means (120, 110) whose playback operation was most recently initiated, the selection value representing the second playback means upon insertion of a recording medium thereinto;
selecting the second signal for output if the signal source selection value changes from representing the first playback means to the second playback means; and
entering the first playback means into a pause mode.

10. A method according to claim 9, comprising changing the first playback means (120) from a pause mode to a stop mode if the signal source selection value does not change again within a predetermined time.

11. A method according to claim 10, comprising inviting the user to input a request, via a user input means (117, 200, 114), to put the first playback means (120), into a stop mode, in response to a change in the selection value.

12. A method according to any one of claims 10 to 11, comprising locating a DVD deck (121) and a VCR deck (111) into said first and second playback means (120, 110) respectively.

13. A method according to claim 12, comprising locating the control means (115) in the second playback means (110) housing the VCR deck (111).

14. A method according to claim 12, comprising transmitting a control signal to a DVD control unit (129) to control the operation of the first playback means (120) so that the operational mode of the first playback means (120) is switched to the pause mode or the stop mode.

15. A method according to claim 9, further comprising:
generating a selection menu using an on-screen display (OSD) unit (114, 126), relating to an operational mode of either one of the playback means (120, 110); and
receiving a selection command made by a user via the selection menu, and to control the operational mode of either one of the playback means (120, 110) to change in response to the selection command, when the selection value stored in the selection information storage means (115a) is changed from identifying one of the playback means (120, 110) to identifying the other playback means (120, 110).

16. A method according to claim 15, comprising transmitting a control command to a DVD control unit (129) so that the operational mode of the playback means (120, 110) which includes a DVD deck (121), is switched in response to the selection command made by the user via the selection menu.

## Patentansprüche

1. Vorrichtung zur Wiedergabe eines Aufnahmemediums, umfassend:
erste und zweite Wiedergabemittel (120, 110) zur Ausgabe jeweiliger erster und zweiter Signale; und
Steuermittel (115) zur wahlweisen Ausgabe besagter ersten und zweiten Signale; **dadurch gekennzeichnet, dass**
das zweite Wiedergabemittel (110) eine automatische Wiedergabefunktion dermaßen aufweist, dass das Wiedergabemittel (120), nach Einschieben eines Aufnahmemediums dahinein, in einen Wiedergabemodus eintritt; und
das Steuermittel Auswahlinformationsspeichermittel (115a) zum Speichern eines Auswahlwerts für die erste Signalquelle aufweist, wobei der Auswahlwert das Wiedergabemittel repräsentiert, dessen Wiedergabefunktion zuallerletzt initiiert wurde, wobei der Auswahlwert das zweite Wiedergabemittel, nach Einschieben eines Aufnahmemediums dahinein, repräsentiert;
das Steuermittel (115) konfiguriert ist, das zweite Signal zur Ausgabe auszuwählen, wenn sich der Signalquellenauswahlwert vom Repräsentieren des ersten Wiedergabemittels auf das zweite Wiedergabemittel ändert; und in einen Pausenmodus des ersten Wiedergabemittels einzutreten.

2. Vorrichtung nach Anspruch 1, wobei das Steuermittel (115) konfiguriert ist, besagtes erste Wiedergabemittel (120) von einem Pausenmodus in einen Stoppmodus zu ändern, wenn sich der Signalquellenauswahlwert nicht innerhalb einer vorbestimmten Zeit wieder ändert.

3. Vorrichtung nach Anspruch 1, die Benutzereingabemittel (117, 200, 114) umfasst, wobei das Steuermittel (115) konfiguriert ist, den Benutzer aufzufordern eine Anforderung, über das Benutzereingabemittel (117, 200, 114), einzugeben, um das erste Wiedergabemittel (120), als Reaktion auf eine Änderung im Auswahlwert, in einen Stoppmodus zu versetzen.

4. Vorrichtung nach einem beliebigen vorhergehenden Anspruch, wobei besagte erste und zweite Wiedergabemittel (120, 110) ein DVD-Deck (121) bzw. ein VCR-Deck (111) umfassen.

5. Vorrichtung nach Anspruch 4, wobei sich das Steuermittel (115) im zweiten Wiedergabemittel (110) befindet, in dem das VCR-Deck (111) untergebracht ist.

6. Vorrichtung nach Anspruch 4, wobei das Steuermittel (115) weiter konfiguriert ist, ein Steuersignal an eine DVD-Steuereinheit (129) zu senden, um die Funktion des ersten Wiedergabemittels (120) so zu steuern, dass der Funktionsmodus des ersten Wiedergabemittels (120) in den Pausenmodus oder den Stoppmodus geschaltet wird.

7. Vorrichtung nach Anspruch 1, weiter umfassend:
eine On-Screen-Display- (OSD-) Einheit (114, 126), die angepasst ist, ein Auswahlmenü zu generieren, das sich auf einen Funktionsmodus beider der Wiedergabemittel (120, 110) bezieht; und
wobei das Steuermittel (115) weiter konfiguriert ist, einen Auswahlbefehl zu empfangen, der von einem Benutzer über das Auswahlmenü erteilt wurde und den Funktionsmodus beider der Wiedergabemittel (120, 110) zu steuern, sich als Reaktion auf den Auswahlbefehl zu ändern, wenn der im Auswahlinformationsspeichermittel (115a) gespeicherte Auswahlwert vom Identifizieren eines der Wiedergabemittel (120, 110) auf Identifizieren des anderen Wiedergabemittels (120, 110) geändert wird.

8. Vorrichtung nach Anspruch 7, wobei das Steuermittel (115) weiter konfiguriert ist, einen Steuerbefehl an eine DVD-Steuereinheit (129) zu senden, sodass der Funktionsmodus des Wiedergabemittels (120, 110), das ein DVD-Deck (121) einschließt, als Reaktion auf den Auswahlbefehl geschaltet wird, der vom Benutzer über das Auswahlmenü erteilt wurde.

9. Verfahren zum Betreiben einer Vorrichtung zur Wiedergabe eines Aufnahmemediums, das folgende Schritte umfasst:
Ausgeben jeweiliger erster und zweiter Signale von einem ersten und zweiten Wiedergabemittel (120, 110); und
wahlweises Ausgeben besagter ersten und zweiten Signale (115), **dadurch gekennzeichnet, dass**
das zweite Wiedergabemittel (110), nach Einschieben eines Aufnahmemediums dahinein, in einen Wiedergabemodus eintritt;
Speichern eines Signalquellenauswahlwerts in einem Speichermittel des Steuermittels, wobei der Auswahlwert das Wiedergabemittel (120, 110) repräsentiert, dessen Wiedergabefunktion zuallerletzt initiiert wurde, wobei der Auswahlwert das zweite Wiedergabemittel, nach Einschieben eines Aufnahmemediums dahinein, repräsentiert;
Auswählen des zweiten Signals zur Ausgabe, wenn sich der Signalquellenauswahlwert vom Repräsentieren des ersten Wiedergabemittels auf das zweite Wiedergabemittel ändert;
und
Eintreten des ersten Wiedergabemittels in einen Pausenmodus.

10. Verfahren nach Anspruch 9, das Ändern des ersten Wiedergabemittels (120) von einem Pausenmodus in einen Stoppmodus umfasst, wenn sich der Signalquellenauswahlwert nicht innerhalb einer vorbestimmten Zeit wieder ändert.

11. Verfahren nach Anspruch 10, das Auffordern des Benutzers umfasst, eine Anforderung über ein Benutzereingabemittel (117, 200, 114) einzugeben, um das erste Wiedergabemittel (120), als Reaktion auf eine Änderung im Auswahlwert, in einen Stoppmodus zu versetzen.

12. Verfahren nach einem beliebigen der Ansprüche 10 bis 11, das weiter Positionieren eines DVD-Decks (121) und eines VCR-Decks (111) in besagte erste bzw. zweite Wiedergabemittel (120, 110) umfasst.

13. Verfahren nach Anspruch 12, das Positionieren des Steuermittels (115) in das zweite Wiedergabemittel (110) umfasst, in dem das VCR-Deck (111) untergebracht ist.

14. Verfahren nach Anspruch 12, das Senden eines Steuersignals an eine DVD-Steuereinheit (129) umfasst, um die Funktion des ersten Wiedergabemittels (120) so zu steuern, dass der Funktionsmodus des ersten Wiedergabemittels (120) in den Pausenmodus oder den Stoppmodus geschaltet wird.

15. Verfahren nach Anspruch 9, weiter umfassend:
Generieren eines Auswahlmenüs unter Verwendung einer On-Screen-Display- (OSD-) Einheit (114, 126), die sich auf einen Funktionsmodus beider der Wiedergabemittel (120, 110) bezieht; und
Empfangen eines Auswahlbefehls, der von einem Benutzer über das Auswahlmenü erteilt wurde und den Funktionsmodus beider der Wiedergabemittel (120, 110) zu steuern, sich als Reaktion auf den Auswahlbefehl zu ändern, wenn der im Auswahlinformationsspeichermittel (115a) gespeicherte Auswahlwert vom Identifizieren eines der Wiedergabemittel (120, 110) auf Identifizieren des anderen Wiedergabemittels (120, 110) geändert wird.

16. Verfahren nach Anspruch 15, das Senden eines Steuerbefehls an eine DVD-Steuereinheit (129) umfasst, sodass der Funktionsmodus des Wiedergabemittels (120, 110), das ein DVD-Deck (121) einschließt, als Reaktion auf den Auswahlbefehl geschaltet wird, der vom Benutzer über das Auswahlmenü erteilt wurde.

## Revendications

1. Appareil de reproduction de support d'enregistrement, comprenant :
des premier et deuxième moyens de lecture (120, 110) pour délivrer des premier et deuxième signaux respectifs ; et
un moyen de commande (115) pour délivrer sélectivement lesdits premier et deuxième signaux;
**caractérisé en ce que**
le deuxième moyen de lecture (110) possède une fonction de lecture automatique telle que le moyen de lecture (120) passe en mode lecture lorsqu'un support d'enregistrement y est introduit ; et
le moyen de commande possède un moyen de stockage d'informations de sélection (115a) pour stocker une première valeur de sélection de la source de signal, la valeur de sélection représentant le moyen de lecture dont l'opération de lecture a été lancée le plus récemment, la valeur de sélection représentant le deuxième moyen de lecture lorsqu'un support d'enregistrement y est introduit ;
le moyen de commande (115) est configuré pour sélectionner le deuxième signal afin de le délivrer si la valeur de sélection de la source de signal passe de la représentation du premier moyen de lecture à celle du deuxième moyen de lecture ; et pour faire passer en mode pause du premier moyen de lecture.

2. Appareil selon la revendication 1, dans lequel le moyen de commande (115) est configuré pour faire passer ledit premier moyen de lecture (120) d'un mode pause à un mode arrêt si la valeur de sélection de la source de signal ne change pas de nouveau dans un intervalle de temps prédéterminé.

3. Appareil selon la revendication 1, comprenant des moyens de saisie par l'utilisateur (117, 200, 114), dans lequel le moyen de commande (115) est configuré pour inviter l'utilisateur à saisir une requête, par le biais des moyens de saisie par l'utilisateur (117, 200, 114), afin de faire passer le premier moyen de lecture (120) en mode arrêt en réponse à un changement de la valeur de sélection.

4. Appareil selon l'une quelconque des revendications précédentes, dans lequel lesdits premier et deuxième moyens de lecture (120, 110) comprennent une platine de lecture de DVD (121) et une platine de lecture de cassettes vidéo (111), respectivement.

5. Appareil selon la revendication 4, dans lequel le moyen de commande (115) est situé dans le deuxième moyen de lecture (110) contenant la platine de lecture de cassettes vidéo (111).

6. Appareil selon la revendication 4, dans lequel le moyen de commande (115) est configuré en outre pour transmettre un signal de commande à un module de commande de DVD (129) afin de commander le fonctionnement du premier moyen de lecture (120) de façon à faire passer le mode de fonctionnement du premier moyen de lecture (120) en mode pause ou en mode arrêt.

7. Appareil selon la revendication 1, comprenant plus:
un module d'affichage sur écran (OSD) (114, 126) adapté pour générer un menu de sélection concernant le mode de fonctionnement de l'un ou l'autre des moyens de lecture (120, 110) ; et
dans lequel le moyen de commande (115) est configuré en outre pour recevoir une instruction de sélection saisie par un utilisateur à partir du menu de sélection et pour commander le changement de mode de fonctionnement de l'un ou l'autre des moyens de lecture (120, 110) en réponse à l'instruction de sélection lorsque la valeur de sélection stockée dans le moyen de stockage d'informations de sélection (115a) passe de l'identification de l'un des moyens de lecture (120, 110) à l'identification de l'autre moyen de lecture (120, 110).

8. Appareil selon la revendication 7, dans lequel le moyen de commande (115) est configuré en outre pour transmettre une instruction de commande à un module de commande de DVD (129) de façon à changer le mode de fonctionnement des moyens de lecture (120, 110) comprenant une platine de lecture de DVD (121) en réponse à l'instruction de sélection saisie par l'utilisateur à partir du menu de sélection.

9. Procédé d'exploitation d'un appareil de reproduction de support d'enregistrement, comprenant les étapes consistant à :
délivrer des premier et deuxième signaux respectifs à partir de premier et deuxième moyens de lecture (120, 110) ; et
délivrer sélectivement lesdits premier et deuxième signaux à partir du moyen de commande (115) ;
**caractérisé en ce que**
le deuxième moyen de lecture (110) passe en mode lecture lorsqu'un support d'enregistrement y est introduit ;
une valeur de sélection de la source de signal est stockée dans un moyen de stockage du moyen de commande, la valeur de sélection représentant le moyen de lecture (120, 110) dont l'opération de lecture a été lancée le plus récemment, la valeur de sélection représentant le deuxième moyen de lecture lorsqu'un support d'enregistrement y est introduit ;
le deuxième signal est sélectionné pour être délivré si la valeur de sélection de la source de signal passe de la représentation du premier moyen de lecture à celle du deuxième moyen de lecture ; et
le premier moyen de lecture est mis en mode pause.

10. Procédé selon la revendication 9, comprenant le passage du premier moyen de lecture (120) d'un mode pause à un mode arrêt si la valeur de sélection de la source de signal ne change pas de nouveau pendant un intervalle de temps prédéterminé.

11. Procédé selon la revendication 10, comprenant l'invitation de l'utilisateur à saisir une requête, par le biais d'un moyen de saisie par l'utilisateur (117, 200, 114), afin de faire passer le premier moyen de lecture (120) en mode arrêt en réponse à un changement de la valeur de sélection.

12. Procédé selon l'une quelconque des revendications 10 et 11, comprenant le placement d'une platine de lecture de DVD (121) et d'une platine de lecture de cassettes vidéo (111), respectivement, dans lesdits premier et deuxième moyens de lecture (120, 110).

13. Procédé selon la revendication 12, comprenant le placement du moyen de commande (115) dans le deuxième moyen de lecture (110) contenant la platine de lecture de cassettes vidéo (111).

14. Procédé selon la revendication 12, comprenant la transmission d'un signal de commande à un module de commande de DVD (129) afin de commander le fonctionnement du premier moyen de lecture (120) de façon à faire passer le mode de fonctionnement du premier moyen de lecture (120) en mode pause ou en mode arrêt.

15. Procédé selon la revendication 9, comprenant en plus les étapes consistant à :
générer un menu de sélection en utilisant un module d'affichage sur écran (OSD) (114, 126) concernant le mode de fonctionnement de l'un ou l'autre des moyens de lecture (120, 110) ; et
recevoir une instruction de sélection saisie par un utilisateur à partir du menu de sélection et commander le changement de mode de fonctionnement de l'un ou l'autre des moyens de lecture (120, 110) en réponse à l'instruction de sélection lorsque la valeur de sélection stockée dans le moyen de stockage d'informations de sélection (115a) passe de l'identification de l'un des moyens de lecture (120, 110) à l'identification de l'autre moyen de lecture (120, 110).

16. Procédé selon la revendication 15, comprenant la transmission d'une instruction de commande à un module de commande de DVD (129) de façon à changer le mode de fonctionnement des moyens de lecture (120, 110) comprenant une platine de lecture de DVD (121) en réponse à l'instruction de sélection saisie par l'utilisateur à partir du menu de sélection.
